# EUROPEAN PATENT APPLICATION

(11) **EP 4 529 018 A1**
(43) Date of publication of application: **26.03.2025**
(21) Application number: 22942531.9
(22) Date of filing: 26.12.2022
(51) Int. Cl.: H02S 40/30

(54) **WIRING DEVICE FOR PHOTOVOLTAIC DEVICE, AND PHOTOVOLTAIC APPARATUS**

(30) Priority: 16.05.2022 CN 202221173813 U
(71) Applicant: Sungrow Power Supply Co., Ltd., Hefei, Anhui 230088 (CN)
(72) Inventor: ZHANG, Qing, Hefei, Anhui 230088 (CN); TAO, Gaozhou, Hefei, Anhui 230088 (CN); CHEN, Peng, Hefei, Anhui 230088 (CN)
(74) Representative: Zacco Norway AS
(86) International application number: PCT/CN2022/141963
(87) International publication number: WO 2023/221511

(57) **Abstract**

Provided in the present application are a wiring device for a photovoltaic device, and a photovoltaic apparatus. The wiring device for a photovoltaic device comprises a first component and a second component. The first component is arranged at one end of the photovoltaic device; the second component is detachably connected to the first component; and the second component is used, when being connected to the first component, for being connected to the photovoltaic device by means of the first component, and for supplying power to the photovoltaic device or being supplied power therefrom. The technical solutions of the embodiments of the present application can solve the problem of wiring being difficult due to the wiring space being tight at the bottom of a photovoltaic device, such that the effect of the photovoltaic device being capable of being electrically connected to an external cable, without needing wiring every time, is achieved.

## Description

The present application claims the priority to Chinese Patent Application No. 202221173813.7, titled "WIRING DEVICE FOR PHOTOVOLTAIC DEVICE, AND PHOTOVOLTAIC APPARATUS", filed with the China National Intellectual Property Administration on May 16, 2022, which is incorporated herein by reference in its entirety.

### FIELD

The present application relates to the photovoltaic technical field and in particular to a wiring device for a photovoltaic device, and a photovoltaic apparatus.

### BACKGROUND

Solar energy resources are widely distributed. Compared with hydropower, wind power, nuclear power, etc., a solar power generation has no emissions or noises, is a mature technology, and is safe and reliable in use. The solar power generation is a renewable energy generation technology with ideal characteristics for sustainable development.

At present, in order to reduce the manufacturing cost of a photovoltaic module holder, its height is gradually decreased. As a result, the space between the installation position of a photovoltaic device such as a photovoltaic inverter and the ground is getting smaller. A wiring space at a bottom of the existing photovoltaic device such as the photovoltaic inverter is limited. Thus, it is desired in the art to solve the technical problem of wiring difficulty.

### SUMMARY

There are provided in the present application a wiring device for a photovoltaic device and a photovoltaic apparatus, which can solve the technical problem of a small wiring space at a bottom of the existing photovoltaic device such as photovoltaic inverter and of the difficulty in wiring.

According to an aspect of the present application, a wiring device for a photovoltaic device is provide, including:
a first component, which is located at one end of a photovoltaic device; and
a second component, which is detachably connected to the first component, wherein the second component is configured to, when being connected to the first component, be connected to the photovoltaic device via the first component and to be supplied with electricity from or supply electricity to the photovoltaic device.

In an embodiment, the first component includes at least one first charging interface provided on an outer surface of a box body of the photovoltaic device, and is electrically connected to the photovoltaic device;
the second component comprises a support plate and at least one second charging interface provided on the support plate; and
the first charging interface is pluggablely connected to the second charging interface.

In an embodiment, the first charging interface includes a socket, and the second charging interface comprises a plug; or
the first charging interface includes a plug, and the second charging interface includes a socket.

In an embodiment, the first component includes at least one first connector provided on the outer surface of the box body of the photovoltaic device;
the second component includes a fixing plate and at least one second connector located on the fixing plate, wherein the fixing plate is adjacent to and connected with the support plate and is configured to fix the photovoltaic device; and
the first connector and the second connector are detachably and mechanically connected with each other.

In an embodiment, the first connector includes at least one hanger, and the second connector includes at least one supporting tongue; or
the first connector includes at least one supporting tongue, and the second connector includes at least one hanger.

In an embodiment, a plug-in direction of the first charging interface and the second charging interface is the same as a plug-in direction of the first connector and the second connector.

In an embodiment, the first charging interface is provided on a bottom surface of the photovoltaic device and the first connector is provided on a side surface of the photovoltaic device; and
the support plate is arranged parallel to the bottom surface of the photovoltaic device, and the fixing plate is arranged parallel to the side surface of the photovoltaic device provided with the first connector.

In an embodiment, the first component further includes a position-limit protrusion, which is arranged on a surface of the first component adjacent to the support plate,
the second component further includes a position-limit slot, which is arranged on a surface of the support plate adjacent to the first component, wherein the position-limit protrusion is configured to be engaged with or plugged in the position-limit slot.

In an embodiment, a plug-in direction of the position-limit slot and the position-limit protrusion is the same as the plug-in direction of the first charging interface and the second charging interface.

In an embodiment, the support plate includes a first cavity, which is located between the support plate and the first component, wherein the first cavity is configured to accommodate the second charging interface.

In an embodiment, the support plate includes at least one first through-hole, and the second charging interface is provided on the support plate through the at least one first through-hole.

In an embodiment, the second component further includes at least one sealing structure, which is configured to connect the first charging interface to the second charging interface tightly.

In an embodiment, the fixing plate includes at least two second through holes, which are configured to fix the second component; and
the at least two second through-holes are further configured to fix the photovoltaic device when the second component is connected to the first component.

In another aspect of the present application, a photovoltaic apparatus is provided, including the wiring device for the photovoltaic device according to the above first aspect and a photovoltaic device.

In the wiring device for the photovoltaic device according to the embodiments of the present application including a first component located at one end of a photovoltaic device and a second component detachably connected to the first component, the photovoltaic device is allowed to be easily and conveniently detached from or installed on the second component via the first component, facilitating the installation or maintenance of the photovoltaic device. Furthermore, when the second component is electrically connected to the first component, the second component is electrically connected to the photovoltaic device via the first component so as to be supplied with electricity or supply electricity to the photovoltaic device. This avoids a complex wiring work in a small wiring space without additionally providing a junction box, and the installation cost of the photovoltaic device is reduced.

It should be understood that the content described in this section is neither intended to identify key or important features of the embodiments of the present application, nor intended to limit the scope of the present application. Other features of the present application will be easily understood through the following description.

### BRIEF DESCRIPTION OF THE DRAWINGS

In order to illustrate the technical solution in embodiments of the present application more clearly, a brief introduction will be made to the accompanying drawings required in the description of the embodiments. Apparently, the accompanying drawings to be described are merely some embodiments of the present application. For those skilled in the art, other drawings can be obtained based on these drawings without any creative work.
FIG. 1 is a schematic structural view of a photovoltaic apparatus in the prior art;
FIG. 2 is a schematic structural view of an interior of a junction box of a photovoltaic inverter in the prior art;
FIG. 3 is a schematic cross-section structural view of a wiring device for a photovoltaic device according to an embodiment of the present application;
FIG. 4 is a schematic structural view of a first component of the wiring device for the photovoltaic device according to an embodiment of the present application;
FIG. 5 is a schematic structural view of a second component of the wiring device for the photovoltaic device according to an embodiment of the present application;
FIG. 6 is a schematic structural view of a first component of another wiring device for a photovoltaic device according to an embodiment of the present application;
FIG. 7 is a schematic structural view of a second component of another wiring device for a photovoltaic device according to an embodiment of the present application;
FIG. 8 is a schematic structural view of a first component of another wiring device for a photovoltaic device according to an embodiment of the present application;
FIG. 9 is a schematic structural view of a second component of another wiring device for a photovoltaic device according to an embodiment of the present application;
FIG. 10 is a schematic cross-section structural view of another wiring device for a photovoltaic device according to an embodiment of the present application;
FIG. 11 is a schematic structural view of a second component of another wiring device for a photovoltaic device according to an embodiment of the present application;
FIG. 12 is a schematic structural view of a photovoltaic apparatus according to an embodiment of the present application.

### DETAILED DESCRIPTION OF THE EMBODIMENTS

In order to better understand the present application for those skilled in the art, a clear and complete description of the technical solution in embodiments of the present application will be given below in conjunction with the accompanying drawings. Apparently, the described embodiments are only a part of embodiments of the present application rather than all of them. Based on the embodiments of the present application, all other embodiments obtained by those skilled in the art without any creative work shall fall within the scope of the present application.

It should be noted that the terms "first", "second", etc. in the specification and claims of the present application, as well as the above drawings, are used to distinguish similar objects, and are not intended to describe a specific order or sequence. It should be understood that the data used in this way can be interchanged in appropriate circumstances, so that the embodiments described herein can be implemented in order other than those illustrated or described herein. In addition, the terms "including" and "having", as well as any variations thereof, are intended to cover a non-exclusive inclusion, for example, a process, method, system, product, or equipment that includes a series of steps or units do not need to be limited to those clearly listed steps or units, but may include other steps or units that are not clearly listed or inherent to the process, method, product, or equipment.

As described in the Background, the height of the photovoltaic module holder is getting lower, and a space between a wiring position at a bottom of a photovoltaic inverter and the ground is getting smaller. In addition, a wiring space at the bottom of the photovoltaic device is further decreased in case of adding a connection with DC energy storage cables at the bottom of the photovoltaic device. Moreover, with an increasing demand for product usage, a unit power of the photovoltaic device is increasing, and AC cables used in the photovoltaic device are thick, which brings inconvenience to the manual wiring work of the photovoltaic device.

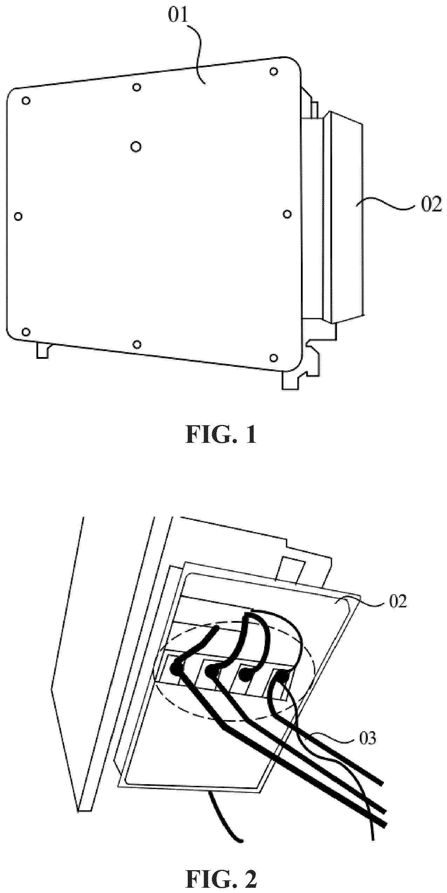

In view of the above problem, it is commonly used in the prior art a junction box for a photovoltaic inverter provided on a side of the photovoltaic module holder for wiring. FIG. 1 is a schematic structural view of a photovoltaic apparatus in the prior art. As shown in FIG. 1, the photovoltaic apparatus includes a photovoltaic device 01 and a junction box 02. The junction box 02 is located on a side of the photovoltaic device 01 and has a large volume. The junction box 02 takes up space when it is provided on the side of the photovoltaic device 01. Moreover, after adding DC energy storage cables, in order to meet a connection requirement of multi-stranded cables, the junction box 02 needs to be installed on each side of the photovoltaic device 01, that is, the junction boxes 02 are provided on both sides of the photovoltaic device 01, and thus take up much space. It should be noted that FIG. 1 only illustratively shows the junction box 02 provided on one side of the photovoltaic device 01. Every time the photovoltaic device is electrically connected to the cables, a cover of the junction box needs to be opened for manual wiring operations. FIG. 2 is a schematic structural view of an interior of a junction box of a photovoltaic inverter in the prior art. As shown in FIG. 2, multiple strands of cables 03 are connected in the junction box 02. When connecting the cables 03 to various wiring terminals in the junction box 02, a lot of steps such as organizing the wiring harness and fixing the cables 03 are required, resulting in a cumbersome operation.

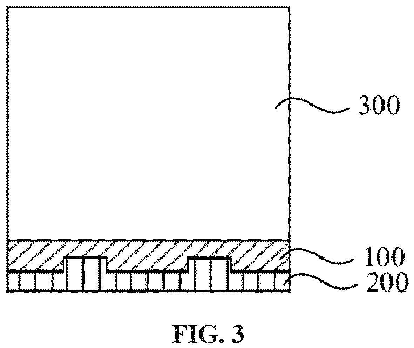

Based on the above technical problems, the following technical solutions are provided in the embodiments of the present application:
A wiring device for a photovoltaic device is provided in the embodiments of the present application. FIG. 3 is a schematic cross-section structural view of a wiring device for a photovoltaic device according to an embodiment of the present application. As shown in FIG. 3, the wiring device for the photovoltaic device includes a first component 100 and a second component 200. The first component 100 is located at one end of a photovoltaic device 300, and the second component 200 is detachably connected to the first component 100. The second component 200 is configured to be connected to the photovoltaic device 300 via the first component 100 when being connected to the first component 100, and to be supplied with electricity from or supply electricity to the photovoltaic device 300.

Specifically, the first component 100 may include an electrical connection component and a mechanical connection component. The first component 100 is located at one end of the photovoltaic device 300, and can be electrically connected to the power interface of the photovoltaic device 300. The first component 100 is further configured to be mechanically connected with the photovoltaic device 300. The first component 100 may be detachably connected to the second component 200, thereby detachably connecting the photovoltaic device 300 to the second component 200 via the first component 100. The photovoltaic device 300 can be easily and conveniently detached from the second component 200. Therefore, when the photovoltaic device 300 malfunctions or requires maintenance, the first component 100 and the second component 200 can be easily disassembled. As the first component 100 is located at one end of the photovoltaic device 300, when the first component 100 and the second component 200 are disassembled, the photovoltaic device 300 is separated from the second component 200, which facilitates the maintenance of the photovoltaic device 300.

If the photovoltaic device 300 is to be installed, for example, at the first time or after completion of maintenance, it can be achieved by connecting the first component 100 at one end of the photovoltaic device 300 to the second component 200 without using tools, so that the first component 100 is mechanically connected to the second component 200 and at the same time the photovoltaic device 300 is electrically connected to the second component 200. When the second component 200 is mechanically connected to the first component 100, the second component 200 is electrically connected to the photovoltaic device 300 via the first component 100 so that the second component 200 may be supplied with electricity from or supply electricity to the photovoltaic device 300.

It should be noted that the first component 100 may be arranged at any end of the photovoltaic device 300, which is not limited herein.

Exemplarily, the first component 100 may be located at a bottom of the photovoltaic device 300, and may be engaged with the second component 200 in a direction of gravity so as to achieve a reliable electrical connection between the photovoltaic device 300 and the second component 200 via the first component 100 under the self-gravity of the photovoltaic device 300. After being electrically connected to the second component 200 through the first component 100, the photovoltaic device 300 can output its own stored electrical energy to external electrical equipment via the first and second components 100, 200, i.e., supply electricity to the external electric equipment. Alternatively, the photovoltaic device 300 can also draw power from an external power source to perform the normal operation of the photovoltaic device 300.

The wiring device for the photovoltaic device in the embodiment includes a first component and a second component. The first component is located at one end of the photovoltaic device. The first component and the second component are detachable connected, allowing the photovoltaic device to be easily and conveniently detached from or be installed on the second component, and facilitating the installation or maintenance of the photovoltaic device. In addition, when the first component is connected to the second component, the second component is electrically connected to the photovoltaic device via the first component so as to draw power from or supply electricity to the photovoltaic device. It can avoid a complex wiring work in a small wiring space, and there is no need to additionally provide a junction box, thus reducing the installation cost of the photovoltaic device.

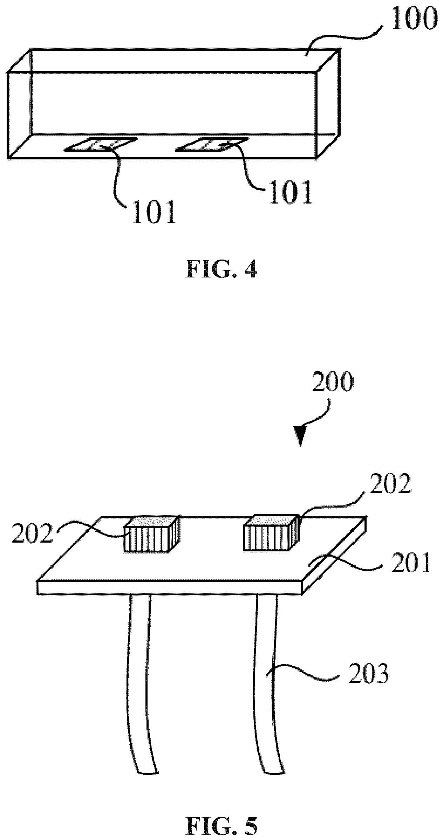

An optional embodiment is proposed and based on the above embodiment. FIG. 4 is a schematic structural view of a first component of the wiring device for the photovoltaic device according to an embodiment of the present application, and FIG. 5 is a schematic structural view of a second component of the wiring device for the photovoltaic device according to an embodiment of the present application. Referring to FIGS. 4 and 5, the first component 100 includes at least one first charging interface 101, which is provided on an outer surface of a box body of the photovoltaic device 300 and is electrically connected to the photovoltaic device 300. The second component 200 includes a support plate 201 and at least one second charging interface 202 provided on the support plate 201. The first charging interface 101 may be in plug-in connection with the second charging interface 202.

Specifically, the first charging interface 101 of the first component 100 is located on the outer surface of the box body of the photovoltaic device 300. The photovoltaic device 300 can supply electricity to the external electric equipment through the first charging interface 101, or the photovoltaic device 300 can be also supplied with electricity from an external power source through the first charging interface 101 to maintain the normal operation.

The support plate 201 of the second component 200 is configured to support the photovoltaic device 300. As shown in FIG. 3, after the support plate 201 is fixed to a supporter, the photovoltaic device 300 is placed on the support plate 201 and mechanically connected to the support plate 201, thereby fixing the photovoltaic device 300 to the support plate 201. When the maintenance of photovoltaic device 300 is needed, the photovoltaic device 300 may be moved from the support plate 201 of the second component 200 without using the tools, and thus may be mechanically disconnected from the support plate 201 for the maintenance of the photovoltaic device 300.

At least one second charging interface 202 may be further provided on the support plate 201, and may be integrated with an external cable 203 that need to be connected to the photovoltaic device 300. When the second charging interfaces 202 are installed for the first time, all external cables 203 can be connected to the second charging interface 202. Therefore, in the actual operation, when the first charging interface 101 is in plug-in connection with the second charging interface 202, the electrical connection between the photovoltaic device 300 and the external cables 203 can be achieved, avoiding a manual wiring operation every time the photovoltaic device 300 is electrically connected to the external cables 203.

The first charging interface 101 is pluggablely connected to the second charging interface 202. When the first charging interface 101 is in plug-in connection with the second charging interface 202, the photovoltaic device 300 is connected to the second charging interface 202, that is, the photovoltaic device 300 is electrically connected to the external cables 203. When the first charging interface 101 and the second charging interface 202 are disconnected, the photovoltaic device 300 is disconnected from the second charging interface 202, and is electrically disconnected from the external cable 203. Therefore, with the first charging interface 101 and the second charging interface 202 which form a plug-in structure, it facilitates electrical connection between the photovoltaic device 300 and the second charging interface 202, avoiding repeated manual and complex wiring operations.

It should also be noted that the first component 100 is provided with at least one first charging interface 101, and the second component 200 is also provided with at least one second charging interface 202 on the support plate 201. Exemplarily, the first charging interface 101 and the second charging interface 202 may be AC interfaces for transmitting AC electrical energy. The number of the first charging interface 101 may be two, and the number of the second charging interface 202 may also be two accordingly, thereby forming two sets of the first charging interfaces 101 and the second charging interfaces 202.

Exemplarily, one of the two sets of first charging interfaces 101 and the second charging interfaces 202 may be an AC interface for outputting AC electrical energy to external electric equipment for use in the operation of the external electric equipment. The other set may be a DC interface for outputting DC electrical energy to external energy storage equipment for storage and backup, or for obtaining DC electrical energy from external power supply equipment through the DC interface for use in the operation of the photovoltaic device 300 itself.

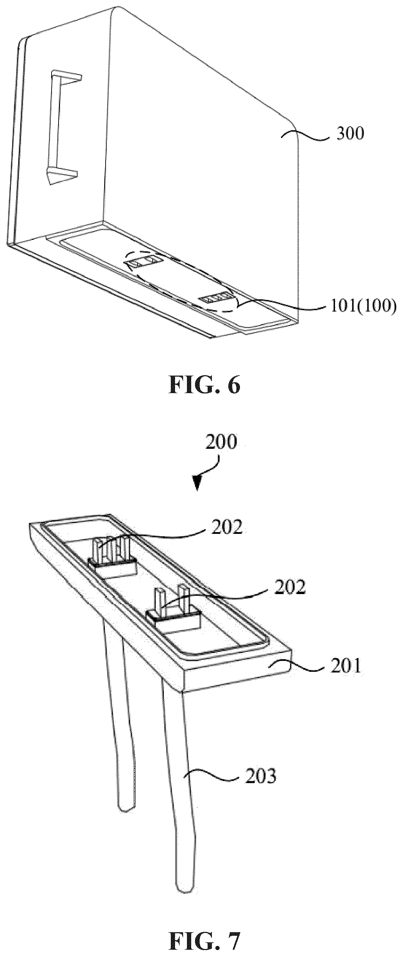

Optionally, FIG. 6 is a schematic structural view of a first component of another wiring device for a photovoltaic device according to an embodiment of the present application and FIG. 7 is a schematic structural view of a second component of another wiring device for the photovoltaic device according to an embodiment of the present application. Based on the above embodiments, as shown in FIGS. 6 and 7, the first charging interface 101 includes a socket, and the second charging interface 202 includes a plug. Alternatively, the first charging interface 101 includes a plug, and the second charging interface 202 includes a socket.

Specifically, the first charging interface 101 and the second charging interface 202 form a plug-in structure, which easily enables an electrical connection between the first component 100 and the second component 200. Exemplarily, the plug-in structure may include a plug and a socket of DC, a plug and a socket of AC, a plug and a socket of USB, a plug and a socket of Type-C and so on. However, in this embodiment, for a photovoltaic device 300 for transmission of high-power and high-current electrical energy, the first charging interfaces 101 and the second charging interfaces 202 may be a DC two-phase electrical plug and a two-hole socket, and a AC three-phase electrical plug and a three-hole socket.

It should be noted there is no limitation to the structural configuration of the first charging interface 101 and the second charging interface 202. For example, the first charging interface 101 may be a plug, whereas the second charging interface 202 may be a socket. Alternatively, the first charging interface 101 may be a socket, whereas the second charging interface 202 may be a plug. There is no need to limit the structure of the first charging interface 101 or the second charging interface 202 to one of the plug and the socket as long as the first charging interface 101 and the second charging interface 202 are pluggable.

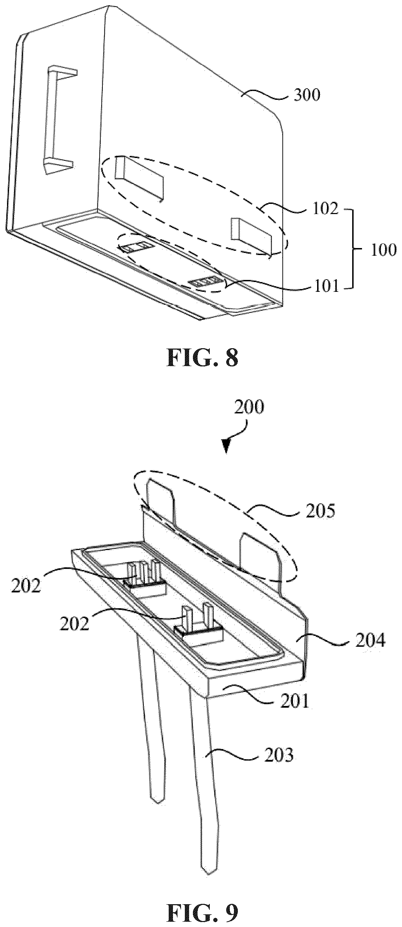

An optional embodiment is proposed and based on the above embodiments. FIG. 8 is a schematic structural view of a first component of another wiring device for a photovoltaic device according to an embodiment of the present application, and FIG. 9 is a schematic structural view of a second component of another wiring device for the photovoltaic device according to the embodiment of the present application. As shown in FIGS. 8 and 9, the first component 100 includes at least one first connector 102, which is provided on the outer surface of the box body of the photovoltaic device 300. The second component 200 includes a fixing plate 204 and at least one second connector 205 located on the fixing plate 204. The fixing plate 204 is adjacent to and connected with the support plate 201 and is used to fix the photovoltaic device 300. The first connector 102 and the second connector 205 are detachably and mechanically connected.

Specifically, the first connector 102 arranged on the outer surface of the box body of the photovoltaic device 300 is used for easy installation or disassembly of the photovoltaic device 300. The second connector 205 arranged on the fixing plate 204 is configured to be connected with the first connector 102 so as to fix the photovoltaic device 300 to the second component 200. When the photovoltaic device 300 needs to be maintained, it can be easily disassembled. After the maintenance, the photovoltaic device 300 can be easily installed and fixed to the second component 200. The first connector 102 and the second connector 205 form a detachable structure, which achieves a mechanical connection, thereby facilitating the connection and disassembly of the photovoltaic device 300 and the second component 200. The fixing plate 204 is configured to fix the second component 200 on a supporter. The fixing plate 204 and the support plate 201 are adjacent to and connected with each other, so that the photovoltaic device 300 can be supported by the support plate 201 while being fixed to the fixing plate 204, thereby improving the stability of the photovoltaic device 300. Exemplarily, the supporter may include a wall, a photovoltaic module holder and so on.

It should be noted that the number of both the first connector 102 and the second connector 205 is at least one and may be multiple, which is not limited herein. Exemplarily, the number of the first connector 102 and the number of the second connector 205 should be the same so as to achieve a mechanical connection between the first connector 102 and the second connector 205 in one-to-one correspondence, facilitating a plug-in connection between the first connector 102 and the second connector 205. Multiple sets of the first connectors 102 and the second connectors 205 may be provided, which can enhance the stability of fixing the photovoltaic device 300 to the second component 200.

Exemplarily, FIGS. 8 and 9 are schematic structural views showing the wiring device for the photovoltaic device including two sets of the first connectors 102 and the second connectors 205. Two first connectors 102 are provided on the outer surface of the box body of the photovoltaic device 300, and two second connectors 205 are provided on the fixing plate 204. As such, the photovoltaic device 300 can be stably fixed on the second component 200, and the production costs can be reduced.

In addition, two first connectors 102 are arranged in parallel with a first preset spacing distance therebetween, which can simplify the manufacturing process and be easy for production, and increase the stability of the installation and fixation of photovoltaic device 300. Two second connectors 205 are provided on the fixing plate 204 in parallel with a second preset spacing distance therebetween. The first preset spacing distance and the second preset spacing distance are the same, so that two second connectors 205 can be correspondingly plugged in the two first connectors 102. Two sets of the first connectors 102 and the second connectors 205 in parallel can increase the fixing stability of the photovoltaic device 300 and the second component 200, and the difficulty in mechanical connection is low.

Exemplarily, as shown in FIGS. 8 and 9, the first connector 102 and the second connector 205 may be a plug-in structure having a hanger and a supporting tongue. It should be noted that there is no limit to the structural configuration of the first connector 102 and the second connector 205. For example, the first connector 102 may be a hanger and the second connector 205 may be a supporting tongue. Alternatively, the first connector 102 may be a supporting tongue and the second connector 205 may be a hanger. There is no need to limit the structure of the first connectors 102 or the second connectors 205 to one of the hanger and the supporting tongue as long as the first connectors 102 or the second connectors 205 can be plugged in one another. It should be noted that FIG. 8 exemplarily shows that the first connector 102 may a hanger and FIG. 9 exemplarily shows that the second connector 205 may be a supporting tongue, which is not limited herein.

Optionally, based on the above embodiments, a plug-in direction of the first charging interface 101 and the second charging interface 202 is the same as the plug-in direction of the first connector 102 and the second connector 205.

Specifically, since the plug-in direction of the first connector 102 and the second connector 205 is configured to be the same as the plug-in direction of the first charging interface 101 and the second charging interface 202, only one alignment connection is required to complete the plug-in connection of the first connector 102 and the second connector 205 as well as the plug-in connection of the first charging interface 101 and the second charging interface 202. Therefore, the plug-in connection and fixing of the photovoltaic device 300 to the second component 200 and the electrical connection of the photovoltaic device 300 to the external cables 203 can be achieved simultaneously, making the connection of the photovoltaic device 300 to the external cables 203 easier.

Exemplarily, the first charging interface 101 is provided on a bottom surface of the photovoltaic device 300 and the first connector 102 is provided on a side surface of the photovoltaic device 300. The support plate 201 is arranged parallel to the bottom surface of the photovoltaic device 300, and the fixing plate 204 is arranged parallel to the side surface of the photovoltaic device 300 provided with the first connector 102.

Specifically, arranging the support plate 201 parallel to the bottom surface of the photovoltaic device 300 allows the photovoltaic device 300 to closely abut against the support plate 201. Providing the first charging interface 101 on the bottom surface of the photovoltaic device 300 and the second charging interface 202 on the support plate 201 facilitates a plug-in connection between the first charging interface 101 and the second charging interface 202 in a vertical direction. Therefore, the first charging interface 101 and the second charging interface 202 can be tightly connected under the self-gravity of the photovoltaic device 300 in the vertical direction, achieving a good electrical connection.

The fixing plate 204 are arranged parallel to the side surface of the photovoltaic device 300 provided with the first connecting piece 102, which can achieve a parallel plug-in connection between the second connector 205 arranged on the fixing plate 204 and the first connector 102. Exemplarily, the side surface of the photovoltaic device 300 provided with the first connector 102 is perpendicular to the bottom surface, that is, the fixing plate 204 is adjacent to and connected with the support plate 201 and is perpendicular to the support plate 201, which can further improve the fixing stability of the photovoltaic device 300.

The above embodiments illustrate the detachable plug-in connection between the first component 100 and the second component 200 by the first connector 102 and the second connector 205 after the first component 100 and the second component 200 are aligned with each other. Based on the above embodiments, a precise alignment between the first component 100 and the second component 200 can be ensured by means of other positioning structures, thereby ensuring a good mechanical and electrical connection between the first component 100 and the second component 200. The following exemplarily illustrates the other positioning structures included in the first component 100 and the second component 200.

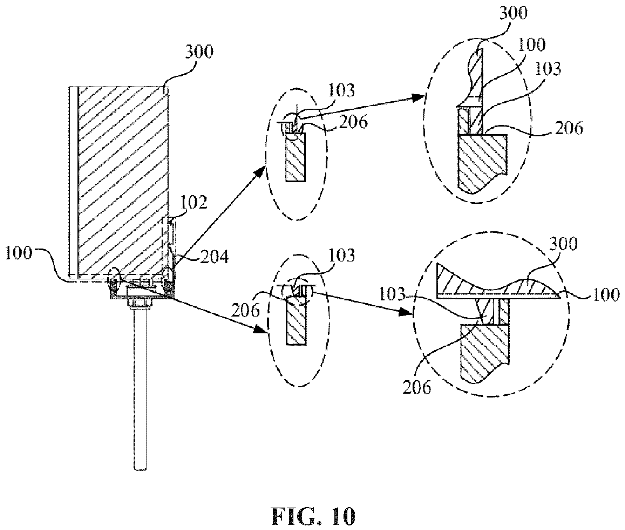

Optionally, FIG. 10 is a schematic cross-section structural view of another wiring device for a photovoltaic device according to an embodiment of the present application. Based on the above embodiments, as shown in FIG. 10, the first component 100 further includes a position-limit protrusion 103, which is arranged on a surface of the first component 100 adjacent to the support plate 201. The second component 200 further includes a position-limit slot 206, which is arranged on a surface of the support plate 201 adjacent to the first component 100. The position-limit protrusion 103 is configured to be engaged with or plugged in the position-limit slot 206.

Specifically, the position-limit protrusion 103 is provided on the surface of the first component 100 away from the bottom of the photovoltaic device 300. The position-limit protrusion 103 is in a protruding structure, which extends from the bottom surface of the photovoltaic device 300. The position-limit slot 206, which is in a groove structure, is provided on the support plate 201 of the second component 200. The groove structure can be engaged with the protruding structure, ensuring a precise alignment between the first component 100 and the second component 200.

Exemplarily, a size of the slot is matched with a size of a protruding part of the position-limit protrusion 103, which facilitates insertion of the position-limit protrusion 103 into the position-limit slot 206, thereby achieving an alignment between the first component 100 and the second component 200.

The position-limit slot 206 is formed on the surface of the support plate 201 close to the first component 100 and is arranged at an edge of the support plate 201. The position-limit protrusion 103 is arranged on the bottom surface of the photovoltaic device 300, and vertically corresponds to the location of the position-limit slot 206. Exemplarily, one or more separate sets of the position-limit slot 206 and the position-limit protrusion 103 may be provided; or a continuous position-limit slot 206 may be provided on the surface of the edge of the support plate 201 close to the first component 100, and corresponds to a continuous position-limit protrusion 103 provided on the bottom surface of the photovoltaic device 300, which is not limited herein. The size of the position-limit protrusion 103 is matched with the size of the position-limit slot 206, so that the position-limit protrusion 103 is just inserted into the position-limit slot 206. The position-limit slot 206 may be tightly connected to the position-limit protrusion 103 by engagement or plug-in connection. In addition, the first connector 102 and the second connector 205 are in detachable loose connection with a certain gap, decreasing the alignment difficulty and avoiding misalignment.

It should be noted that the locations of the position-limit protrusion 103 and the position-limit slot 206 are not limited. The position-limit protrusion 103 may be arranged on the first component 100, and the position-position-limit slot 206 may be arranged on the second component 200; or the position-limit protrusion 103 may be arranged on the second component 200 and the position-limit slot 206 may be arranged on the first component 100, which all can further improve the precision of the alignment between the first component 100 and the second component 200 and achieve a simple alignment operation.

Based on the above embodiments, it should be further noted that the plug-in direction of the position-limit slot 206 and the position-limit protrusion 103 is the same as the plug-in direction of the first charging interface 101 and the second charging interface 202.

The photovoltaic device 300 can be fixed to the fixing plate 204 by plug-in connection between the first connector 102 and the second connector 205, achieving a mechanical connection between the photovoltaic device 300 and the fixing plate 204. Also, the photovoltaic device 300 is electrically connected to the second charging interface 202 by plug-in connection between the first charging interface 101 and the second charging interface 202. The plug-in direction of the position-limit slot 206 and the position-limit protrusion 103 is configured to be the same as the plug-in direction of the first charging interface 101 and the second charging interface 202. The position-limit slot 206 is tightly engaged with the position-limit protrusion 103 while the first charging interface 101 and the second charging interface 202 are electrically connected by plug-in operation, ensuring a precise alignment between the first component 100 and the second component 200. Therefore, the photovoltaic device 300 is mechanically connected to the second component 200, and it is not likely to generate a relative movement between the photovoltaic device 300 and the second component 200, ensuring a good electrical connection between the first charging interface 101 and the second charging interface 202.

Based on the above embodiments, it can be seen that the second charging interface 202 may be integrated with the external cables 203. Therefore, the electrical connection between the photovoltaic device 300 and the external cable 203 can be achieved only by plug-in connection between the first charging interface 101 arranged on the outer surface of the box body of the photovoltaic device 300 and the second charging interface 202. The following embodiments will illustrate how the external cables 203 are electrically connected to the second charging interfaces 202.

Optionally, based on the above embodiments, the support plate 201 includes at least one first through-hole, and the second charging interface 202 is provided on the support plate 201 through the first through-hole.

Specifically, at least one first through-hole is provided in the support plate 201. One of the second charging interface(s) 202 can be inserted in one of the first through-hole(s), with the bottom surface of the second charging interface 202 being flush with the bottom surface of the support plate 201, thereby locating the second charging interface 202 on the support plate 201. It should be noted that the second charging interface 202 is embedded in the first through-hole, and thus the first through-hole cannot be seen in the drawings. By providing a first through-hole on the support plate 201, the external cables 203 can be electrically connected to the second charging interface 202 by passing through the support plate 201 via the first through-hole.

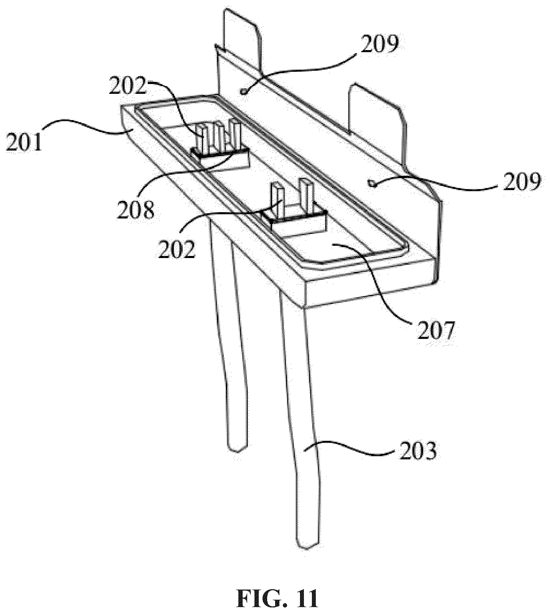

Optionally, FIG. 11 is a schematic structural view of a second component of another wiring device for a photovoltaic device according to an embodiment of the present application. Based on the above embodiments in conjunction with FIGS. 3 and 11, the support plate 201 includes a first cavity 207, which is located between the support plate 201 and the first component 100. The first cavity 207 is used to accommodate the second charging interface 202.

Specifically, the support plate 201 has a high edge and a low middle part, thus forming a first cavity 207 on the side of the support plate 201 close to the first component 100. The second charging interface 202 is arranged on the support plate 201, and the second charging interface 202 is accommodated inside the first cavity 207 defined by the edge of the support plate 201. When the first component 100 arranged at one end of the photovoltaic device 300 and the second component 200 are connected, the first cavity 207 is formed as a closed cavity. The top of the first cavity 207 is defined by the outer surface of the first component 100, and the bottom of the first cavity 207 is defined by the support plate 201, and the surrounding side of the first cavity 207 is defined by the edge of the support plate 201. When being in plug-in connection with the first charging interface 101 arranged on the outer surface of the first component 100, the second charging interface 202 is located in the closed first cavity 207. The first charging interface 101 and second charging interface 202 that are plugged in each other are sealed inside the closed first cavity 207, which can prevent the first charging interface 101 and the second charging interface 202 from being exposed to external sunlight and rain, and improve the service life of the first charging interface 101 and the second charging interface 202. Also, it can prevent a short circuit caused by external conductive liquids such as water coming into contact with the first charging interface 101 and the second charging interface 202, thereby improving the safety of the first charging interface 101 and the second charging interface 202 that are plugged in each other during operation.

Optionally, based on the above embodiments, referring to FIG. 11 again, the second component 200 further includes at least one sealing structure 208, which is used to tightly connect the first charging interface 101 with the second charging interface 202.

Specifically, the sealing structure 208 is provided on the first charging interface 101 or on the second charging interface 202. The sealing structure 208 may be a sealing ring or a gasket structure, which is not limited herein. The sealing structure 208 is deformable. In a plug-in process of the first charging interface 101 and the second charging interface 202, the sealing structure 208 is deformed by compression so as to ensure a tight connection between the first charging interface 101 and the second charging interface 202, achieving a reliable electrical connection. Moreover, the sealing structure 208 further has a waterproof effect. When the first charging interface 101 and the second charging interface 202 are tightly connected through the sealing structure 208, it can further prevent external water and the like from coming into contact with the internal interfaces, avoiding phenomenon including short circuit, and thus improving the safety of the wiring device for the photovoltaic device.

Optionally, based on the above embodiments, referring to FIG. 11 again, the fixing plate 204 includes at least two second through-holes 209, which are used to fix the second component 200. The second through-hole 209 is also used to fix the photovoltaic device 300 when the second component 200 is connected to the first component 100.

Specifically, at least two second through-holes 209 are provided in the fixing plate 204, and the second component 200 can be fixed on the supporter by mechanical connection of mechanical members through the second through-holes 209. Exemplarily, the second component 200 can be fixed to a wall or a photovoltaic holder by screw or bolt connection. After fixing the second component 200 through the second through-hole 209, the photovoltaic device 300 can be detachably connected to the second component 200 via the first component 100, thereby fixing the photovoltaic device 300 to the second component 200. Also, when the maintenance is required, the photovoltaic device 300 can be easily detached from the second component 200 without using tools.

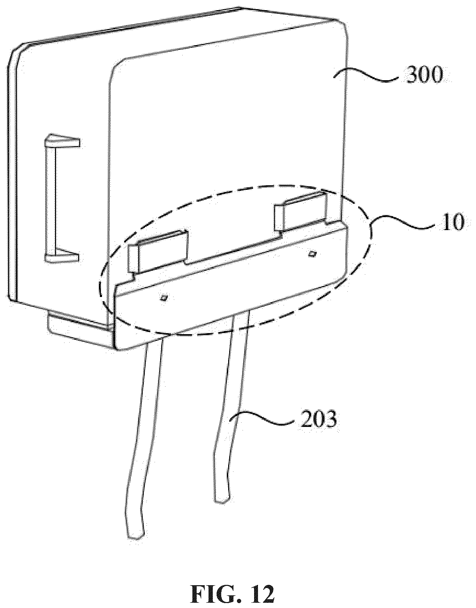

A photovoltaic apparatus is further provided in the embodiments of the present application. FIG. 12 is a schematic structural view of a photovoltaic apparatus according to an embodiment of the present application. As shown in FIG. 12, the photovoltaic apparatus includes the wiring device for the photovoltaic device 10 as described in the above embodiments, and further includes a photovoltaic device 300. Therefore, the photovoltaic apparatus can achieve an electrical connection between the photovoltaic device 300 and the external cables 203 while fixing the photovoltaic device 300. The electrical connection and disconnection between the photovoltaic device 300 and the external cables 203 can be achieved instantaneously without the need for complex manual wiring operations. There is no need to additionally provide a junction box. It is easy to operate and the production cost of the photovoltaic device 300 is reduced.

The above specific implementation methods do not constitute a limitation on the scope of the present application. Those skilled in the art should understand that various modifications, combinations, sub-combinations, and substitutions can be made based on design requirements and other factors. Any modifications, equivalent substitutions, and improvements made within the concept and principles of the present application shall be included within the scope of the present application.

## Claims

1. A wiring device for a photovoltaic device, comprising:
a first component located at one end of the photovoltaic device; and
a second component detachably connected to the first component, wherein
the second component is configured to, when being connected to the first component, be connected to the photovoltaic device via the first component and to be supplied with electricity from or supply electricity to the photovoltaic device.

2. The wiring device for the photovoltaic device according to claim **1,** wherein
the first component comprises at least one first charging interface, which is provided on an outer surface of a box body of the photovoltaic device and is electrically connected to the photovoltaic device,
the second component comprises a support plate and at least one second charging interface provided on the support plate, and
the first charging interface is pluggablely connected with the second charging interface.

3. The wiring device for the photovoltaic device according to claim 2, wherein
the first charging interface comprises a socket and the second charging interface comprises a plug, or
the first charging interface comprises a plug and the second charging interface comprises a socket.

4. The wiring device for the photovoltaic device according to claim 2, wherein
the first component comprises at least one first connector provided on the outer surface of the box body of the photovoltaic device,
the second component comprises a fixing plate and at least one second connector arranged on the fixing plate, wherein the fixing plate is adjacent to and connected with the support plate and is configured to fix the photovoltaic device, and
the first connector and the second connector are detachably and mechanically connected with each other.

5. The wiring device for the photovoltaic device according to claim 4, wherein
the first connector comprises at least one hanger, and the second connector comprises at least one supporting tongue; or
the first connector comprises at least one supporting tongue, and the second connector comprises at least one hanger.

6. The wiring device for the photovoltaic device according to claim 4, wherein
a plug-in direction of the first charging interface and the second charging interface is the same as a plug-in direction of the first connector and the second connector.

7. The wiring device for the photovoltaic device according to claim 4, wherein
the first charging interface is provided on a bottom surface of the photovoltaic device and the first connector is provided on a side surface of the photovoltaic device, and
the support plate is arranged parallel to the bottom surface of the photovoltaic device, and the fixing plate is arranged parallel to the side surface of the photovoltaic device provided with the first connector.

8. The wiring device for the photovoltaic device according to claim 2, wherein
the first component further comprises a position-limit protrusion arranged on a surface of the first component adjacent to the support plate, and
the second component further comprises a position-limit slot arranged on a surface of the support plate adjacent to the first component, wherein the position-limit protrusion is configured to be engaged with or plugged in the position-limit slot.

9. The wiring device for the photovoltaic device according to claim 8, wherein
a plug-in direction of the position-limit slot and the position-limit protrusion is the same as the plug-in direction of the first charging interface and the second charging interface.

10. The wiring device for the photovoltaic device according to claim 2, wherein
the support plate comprises a first cavity located between the support plate and the first component, wherein the first cavity is configured to accommodate the second charging interface.

11. The wiring device for the photovoltaic device according to claim 10, wherein
the support plate comprises at least one first through-hole, and the second charging interface is provided on the support plate through the at least one first through-hole.

12. The wiring device for the photovoltaic device according to claim 11, wherein
the second component further comprises at least one sealing structure configured to connect the first charging interface to the second charging interface tightly.

13. The wiring device for the photovoltaic device according to claim 4, wherein
the fixing plate comprises at least two second through-holes configured to fix the second component, and
the at least two second through-holes are further configured to fix the photovoltaic device when the second component is connected to the first component.

14. A photovoltaic apparatus, comprising the wiring device for the photovoltaic device according to any one of claims 1 to 13 and a photovoltaic device.
